# EUROPEAN PATENT SPECIFICATION

(11) **EP 1 122 417 B1**
(45) Date of publication and mention of the grant of the patent: **20.09.2006**
(21) Application number: 01102253.0
(22) Date of filing: 31.01.2001
(51) Int. Cl.: F02D 41/22, F02D 41/40

(54) **Engine control system**
Regeleinrichtung für eine Brennkraftmaschine
Système de commande de moteur à combustion interne

(30) Priority: 01.02.2000 JP 2000023874
(43) Date of publication of application: 08.08.2001
(73) Proprietor: Mazda Motor Corporation, Aki-gun, Hiroshima 735-0028 (JP)
(72) Inventor: Saito, Tomoaki, Mazda Motor Corporation, Aki-gun, Hiroshima-ken (JP); Kobayashi, Akihiro, Mazda Motor Corporation, Aki-gun, Hiroshima-ken (JP)
(74) Representative: Laufhütte, Dieter

(56) References cited:
- EP-A- 0 831 226
- EP-A- 0 844 380
- EP-A- 0 974 747
- EP-A- 1 088 980
- PATENT ABSTRACTS OF JAPAN vol. 1999, no. 05, 31 May 1999 (1999-05-31) & JP 11 044246 A (NISSAN MOTOR CO LTD), 16 February 1999 (1999-02-16)

## Description

The present invention relates to a control system for an engine, and, more particularly, to an engine control system equipped with an abnormal operation diagnostic feature.

It has been known in the art to spray fuel directly into cylinders by parts into which an intended amount of fuel is divided with an intention to increase an amount of HC (including unburned fuel and modified hydrocarbons after combustion) in exhaust gas. For example, the amount of HC in exhaust gas is ordinarily increased by spraying fuel through main fuel injection only at a point of time near a top dead center of a compression stroke and, when necessary according to engine operating conditions, is increased by post spraying fuel in an expansion stroke following the main fuel injection. Increasing the amount of HC in exhaust gas is implemented in order to cause a NOx trapping material to release NOx in the case where a NOx trapping material is disposed in an exhaust passage to absorb NOx (nitrogen oxides) in exhaust gases, or, in order to supply HC as a reduction substance to a NOx reduction catalyst. Japanese Unexamined Patent Application No. 10 - 205384 discloses, in addition to increasing HC in exhaust gas by implementing main fue injection and post fuel injection and supplying HC as a reduction substance to NOx reduction catalyst, a technique of correcting the amount of post fuel injection on the basis of an estimated amount of HC increased by the post fuel injection for the purpose of correcting a deviation of the amount of HC that is caused due to individual differences fuel injectors, changes of the fuel injectors due to aging or an error of control system. From the fact that an increase in the amount of HC in exhaust gas through the post fuel injection appears as a rise in the oxygen density of the exhaust gas, the amount of HC can be estimated from a change in the oxygen density of the exhaust gas. The oxygen density is detected by an oxygen sensor disposed in the exhaust passage before the reduction catalyst. Japanese Unexamined Patent publication No. 10 - 252544 discloses a technique to feedback control the amount of post fuel injection on the basis of a change in the oxygen density of exhaust gas caused due to the post fuel injection. The oxygen density is detected by an oxygen sensor disposed in the exhaust passage after a catalyst.

Although implementing the post fuel injection to increase the amount of HC in the exhaust gas, the oxygen density of the exhaust gas changes due to a decomposing reaction of fuel, or HC, sprayed through the post fuel injection which is caused through combustion (reaction to oxygen) of the fuel in a combustion chamber and then in the exhaust passage. It is related to a timing of the post fuel injection, the temperature of combustion chamber, the temperature of exhaust gas, etc. how great the fuel reacts to oxygen. Therefore, the estimated increase in the amount of HC is not always precise when the estimate is made on the basis of a change in output from the oxygen sensor disposed in the exhaust passage only. In addition, there is only a few oxygen sensor that can detect a wide range of oxygen density with a high accuracy and, if there, it is expensive.

The fact that the amount of HC in exhaust gas can not be performed with a high accuracy using the oxygen sensor implies that it is hard to realize the expected effect in the correction or the feedback control of the amount of post fuel injection on the basis of the estimated amount of HC.

In EP-A-0 974 747 an engine control system is disclosed for an engine which is equipped with combustion controlling means for controlling fuel combustion in a combustion chamber according to engine operating conditions and reduction substance increasing means for increasing a reduction substance content of exhaust gas by changing a combustion control pattern by the combustion controlling means and which is equipped with torque detecting means for detecting output torque of the engine. However, this system is adapted to detect a change in engine output torque due to residual fuel resulting from an increase in the reduction substance content in a forthcoming combustion cycle, which leads to poor precision.

It is therefore an object of the present invention to provide an engine control system which performs a precise estimate of an increased amount of HC in exhaust gas when increasing the mount of HC as a reduction substance in the exhaust gas by implementing post fuel injection.

It is another object of the present invention to provide an engine control system which performs precise corrective control of an increase in the amount of reduction substance in exhaust gas that is caused by post fuel injection.

The objects of the present invention are accomplished by performing the control of an estimate of an increase in the amount of reduction substance in exhaust gas, the corrective control of an increase in the amount of reduction substance in exhaust gas and the diagnosis of abnormality in controlling an increase in the amount of reduction substance in exhaust gas on the basis of an increase in engine output torque while the control of increasing the amount of reduction substance in exhaust gas is implemented by changing a fuel injection control pattern.

The engine control system, which is used suitably for an engine which is equipped with combustion controlling means for controlling fuel combustion according to engine operating conditions and reduction substance increasing means for increasing an amount of reduction substance in exhaust gas by changing a fuel injection control pattern, and hence a combustion control pattern in a combustion chamber, by the combustion controlling means, comprises controlling means for performing a specified control of the engine on the basis of a change in engine output torque caused by operation of the reduction substance increasing means.

The change in engine output torque is detected by torque detecting means, and an increase in the amount of reduction substance in exhaust gas is estimated on the basis of the change in engine output torque caused at least in the same expansion stroke by operation of the reduction substance increasing means.

In this instance, what is meant by a change in a combustion control pattern in the combustion chamber for providing an increase in the amount of reduction substance in exhaust gas is that the amount of fuel remaining unburned, typically HC, discharged from the combustion chamber (which includes fuel incompletely burned and partially oxidized) is increased. When a small amount of fuel remains unburned, in other words, when exhaust gas contains only a small amount of reduction substance therein, that means that a comparatively large amount of fuel continue to burn in the combustion chamber for a while in an expansion stroke with contribution to generation of engine output torque, which provides an increase in a rising rate of engine output torque during the expansion stroke. On the other hand, when a large amount of fuel remains unburned, i.e. when exhaust gas contains a large amount of reduction substance therein, the rising rate of engine output torque is low. In consequence, the amount of reduction substance in exhaust gas appears as a difference in magnitude of engine output torque during an expansion stroke immediately after a change in combustion control pattern for providing an increase in the amount of reduction substance.

Therefore, the engine control system of the present invention detects a change in engine output torque at least in a specified period of time of an expansion stroke immediately after a change in combustion control pattern for providing an increase in the amount of reduction substance and estimates an increased amount of reduction substance in exhaust gas on the basis of the change in the amount of reduction substance due to the change in combustion control pattern. Plainly speaking, an estimate is made such that the larger the increasing change in engine output torque is, the smaller the increase in the amount of reduction substance is. The engine output torque is precisely monitored by the use of a pressure sensor disposed in the combustion chamber to detect combustion pressure, or by the use of an angle sensor operative to detect fluctuations in rotation of a crankshaft, or otherwise by the use of a sensor operative to detect a torsional deflection of the crankshaft.

The increase in the amount of reduction substance provided by the reduction substance increasing means can be implemented with an intention to make an exhaust gas purifying catalyst in an exhaust passage effectively function. The amount of reduction substance is increased in order for example to accelerate oxidization of a reduction substance of the exhaust gas purifying catalyst for quick activation of the exhaust gas purifying catalyst, to additionally supply a reduction substance of a NOx reduction catalyst operative to convert NOx, or to cause a NOx absorption substance to release NOx. Accordingly, in such a case, the reduction substance increasing means is actuated when it is inferred from engine operating conditions including historical engine operation that the catalyst is less active, or is at a low temperature. The reduction substance increasing means is also actuated when it is inferred from conditions in association with components of the exhaust system, such as a temperature of exhaust gas, a temperature of the catalyst or the concentration of components in exhaust gas that the catalyst needs an increased amount of reduction substance.

In the case where the engine is equipped with fuel injectors of a type spraying fuel directly into the cylinders, the reduction substance increasing means (plainly speaking, the means for increasing the amount of HC) may be such means that, while the combustion control means implements only main fuel injection for spraying an amount of fuel necessary for the engine to provide engine output torque demanded according to engine operating conditions, causes the combustion control means to change the combustion control pattern to another combustion control pattern in which post fuel injection is additionally implemented in an expansion stroke following the implementation of the main fuel injection. Partial combustion of fuel provided through the post fuel injection shows up a change in engine output torque in an expansion stroke immediately after the combustion.

Otherwise, the main fuel injection for spraying an amount of fuel necessary for the engine to provide demanded output torque at a timing near a dead top center of a compression stroke may be performed by split fuel injection, namely multi-shot fuel injection. The split fuel injection refers to multi-shot fuel injection in which a given amount of fuel is divided into parts and sprayed intermittently through a plurality of shots with injection intervals of approximately 50 µsecs. to approximately 100 µsecs. so that the fuel continuously burns in the combustion chamber. While the combustion control means controls the multi-shot fuel injection according to engine operating conditions, the amount of reduction substance in exhaust gas may be increased by changing the combustion pattern so as to increase the number of shots or so as to prolong the injection intervals.

The amount of reduction substance in exhaust gas may be increased by changing the combustion control pattern so as for example to retard the main fuel injection timing by a rotational angle of crankshaft of 10° to 20°. In this instance, pilot fuel injection may be implemented before the main fuel injection. The pilot fuel injection is performed by spraying approximately 1/10 to approximately 1/20 as much as a given amount of fuel for demand engine output torque immediately before the main fuel injection, specifically at a point of time before a top dead center of a compression stroke. The implementation of the pilot fuel injection brings about premixed combustion, a result of which the temperature in the combustion chamber significantly rises accompanying a rise in pressure due to elevation of the piston while producing a pilot flame in the combustion chamber in advance of the main fuel injection. Therefore, satisfactory diffusion combustion is caused without having an adverse effect on ignition of fuel sprayed through the main fuel injection even when retarding the main fuel injection to a point of time after a dead top center of compression stroke.

When installing the engine control system to a gasoline engine, the reduction substance increasing means may be of a type which provides an increase in the amount of reduction substance in exhaust gas by changing the combustion control pattern so as to retard an ignition timing.

According to another preferred embodiment of the present invention, the engine control system comprises torque detecting means for detecting output torque of the engine and correcting means for correcting operation of the reduction substance increasing means so as to provide a target increase in the amount of reduction substance in exhaust gas on the basis of a change in the engine output torque caused at least in a specified period of time of an expansion stroke that is caused due to operation of the reduction substance increasing means.

As previously described, since an increase in the amount of reduction substance in exhaust gas appears as a difference in magnitude of engine output torque during an expansion stroke, the increase in the amount of reduction substance in exhaust gas is controlled to become precisely near a target value by correcting operation of the reduction substance increasing means on the basis of a magnitude of a change in engine output torque due to the operation of the reduction substance. Therefore, in this embodiment, the reduction substance increasing means is corrected in operation according to a difference between the change in the amount of reduction substance and the target value.

According to another embodiment of the present invention, the engine control system comprises first estimating means for estimating an increase in the amount of reduction substance in exhaust gas on the basis of a change in the engine output torque caused at least in the same expansion stroke by the reduction substance increasing means, second estimating means for estimating an increase in the amount of reduction substance in exhaust gas on the basis of a change in a value associated with an amount of reduction substance in exhaust gas, except the change in the engine output torque caused in the specified period of time of an expansion stroke by the reduction substance increasing means, caused by the reduction substance increasing means, and selecting means for selecting the first estimating means to estimate the increase in the reduction substance content of exhaust gas on the basis of the change in the engine output torque caused at least in the specified period of time of an expansion stroke by the reduction substance increasing means when the change in engine output torque is greater than a predetermined first threshold and for selecting the second estimating means to estimate the increase in the amount of reduction substance in exhaust gas when the change in engine output torque is equal to or smaller than a predetermined second threshold.

The estimate of an increase in the amount of reduction substance in exhaust gas that is made by the first estimating means is precise when engine output torque greatly increases during an expansion stroke while the reduction substance increasing means operates. However, since there is not so significant difference from the engine output torque provided while the reduction substance increasing means is not actuated if the engine output torque changes only slightly, the estimate of an increase in the amount of reduction substance in exhaust gas is made with a low accuracy, and is inherently less reliable. On the other hand, a small change in magnitude of engine output torque during an expansion stroke is caused when the amount of reduction substance in exhaust gas greatly changes due to a large amount of residual fuel that is unburned in the combustion chamber. In an event where a change in the amount of reduction substance in exhaust gas is large, the estimate of an increase in the amount of reduction substance is comparatively precisely made by, for example, detecting a change in oxygen density of exhaust gas by the use of an oxygen sensor disposed in the exhaust passage, or detecting a change in exhaust gas temperature by the use of a temperature sensor disposed in the exhaust passage, or otherwise a change in engine output torque that is caused due to recirculation of the reduction substance in exhaust gas when the engine is equipped with an exhaust gas recirculation feature.

Explaining in connection with the case where the second estimating means is of a type which making an estimate of an increase in the amount of reduction substance in exhaust gas on the basis of a change in magnitude of engine output torque caused due for example to combustion of fuel contained in exhaust gas of a reduction substance content that is increased as a result of operation of the reduction substance increasing means, engine output torque is increased while the exhaust gas is recirculated. That is, when the increasing change in engine output torque is small during the expansion stroke, it becomes great after the exhaust gas recirculation. The second estimating means makes an estimate of an increase in the amount of reduction substance from the magnitude of engine output torque after the exhaust gas recirculation, the estimated amount of reduction substance is precise. In other words, since the increase in engine output torque is great when the amount of unburned residual fuel is small (i.e. when the exhaust gas contains a small amount of reduction substance), the estimate is more precisely made by the first estimating means. On the other hand, since the increase in engine output torque is small after exhaust gas recirculation when the amount of unburned residual fuel is great (i.e. when the exhaust gas contains a great amount of reduction substance), the estimate is more precisely made by the second estimating means. The amount of unburned residual fuel can be grasped from an increasing change in engine output torque in an expansion stroke while the reduction substance increasing means operates.

Therefore, according to this embodiment of the present invention, the estimate of an increase in the amount of reduction substance is implemented by the first estimating means on the basis of a change in engine output torque caused at least in the specified period of time of an expansion stroke by the reduction substance increasing means when the change in engine output torque is greater than the predetermined first threshold. Further, the estimate of an increase in the amount of reduction substance is implemented by the second estimating means when the change in engine output torque is equal to or smaller than the second threshold. The selective use of the first estimating means and the second estimating means makes the estimate of an increase in the amount of reduction substance precise regardless of the amount of reduction substance in exhaust gas that is to be increased by the reduction substance increasing means.

The first threshold and the second threshold may be set to the same value or to different values. When the same value is employed, the first estimating means and the second estimating means are selectively used. When the first threshold is set to be smaller than the second threshold, the estimate is made by both the first estimating means and the second estimating means when a change in engine output torque is between the first threshold and the second threshold. In this case, the arithmetical mean of estimated values can be employed. On the other hand, when the first threshold is set to be greater than the second threshold, the estimate is not made by the first estimating means nor by the second estimating means.

According to another aspect not forming part of the scope of protection of the present invention, the engine control system comprises diagnostic means for performing a diagnosis of abnormality of the reduction substance increasing means on the basis of a change in the engine output torque caused at least in a specified period of time of an expansion stroke by the operation of the reduction substance increasing means.

An increase in the amount of reduction substance in exhaust gas appears as a difference in magnitude of engine output torque during an expansion stroke while the reduction substance increasing means operates. Since detection of the engine output is precise, it is precisely judged on the basis of the engine output torque whether the amount of reduction substance increases as intended, in other words whether the reduction substance increasing means operates normally or not. For example, abnormality of the reduction substance increasing means is detected by monitoring a difference in engine output torque from a magnitude which the engine output torque takes when it changes as scheduled.

According to a further aspect not forming part of the scope of protection of the present invention, the engine control system for an engine equipped with fuel injectors of a type spraying fuel directly into cylinders comprises combustion controlling means for controlling fuel injection in a combustion chamber according to engine operating conditions, reduction substance increasing means for increasing a reduction substance content of exhaust gas by changing a fuel injection control pattern between main fuel injection for spraying a given amount of fuel at a point of time near a top dead center of a compression stroke and post fuel injection for spraying a small amount of fuel at a point of time in an expansion stroke following the main fuel injection by the combustion controlling means, exhaust gas recirculation means for admitting exhaust gas partly into the combustion chamber, torque detecting means for detecting output torque of the engine, first diagnostic means for performing a diagnosis of abnormality of the reduction substance increasing means on the basis of the engine output torque caused at least in a specified period of time of an expansion stroke by the operation of the reduction substance increasing means, second diagnostic means for performing a diagnosis of abnormality of the reduction substance increasing means on the basis of the engine output torque when the exhaust gas having the reduction substance content thereof risen by the operation of the reduction substance increasing means and recirculated into the combustion chamber by the exhaust gas recirculation means, and selecting means for selecting the first diagnostic means to perform the diagnosis of abnormality on the basis on a post fuel injection timing set by the reduction substance increasing means when the post fuel injection timing is on an advanced side of a predetermined first reference crank angle and for selecting the second diagnostic means to perform the diagnosis of abnormality based on the post fuel injection timing when the post fuel injection timing is on a retarded side of a predetermined second reference crank angle.

When the post fuel injection is employed in order to increase the amount of reduction substance in exhaust gas, it depends upon the post fuel injection timing whether the amount of residual unburned fuel, i.e. the amount of reduction substance in exhaust gas, increases or decreases. Specifically, the amount of residual unburned fuel is small when the post fuel injection is made at an early timing, or is large when the post fuel injection is made at a later timing.

Therefore, the engine control system of this embodiment, the first diagnostic means is actuated to perform the diagnosis of abnormality on the basis on a post fuel injection timing when the post fuel injection timing is on an advanced side of the predetermined first reference crank angle, and the second diagnostic means is actuated to perform the diagnosis of abnormality on the basis of a post fuel injection timing when the post fuel injection timing is on a retarded side of the predetermined second reference crank angle. In this embodiment, the first reference crank angle and the second reference crank angle may take the same value or different values.

As described above, the engine control system of the present invention detects a magnitude of a change in engine output torque caused at least in a period of time of an expansion stroke due to an increase in the amount of reduction substance provided by the reduction substance increasing means and performs an estimate of an increase in the amount of reduction substance in exhaust gas, a correction of the reduction substance increasing control, or a diagnosis of abnormality of the reduction substance increasing means on the basis of the magnitude of a change in engine output torque. This provides an increased accuracy of the estimate, the correction or the diagnosis. Moreover, the engine control system comprises the first estimating means for estimating an increase in the amount of reduction substance in exhaust gas on the basis of a change in the engine output torque caused at least in the specified period of time of an expansion stroke by the reduction substance increasing means and the second estimating means for estimating an increase in the amount of reduction substance in exhaust gas on the basis of a change in a value associated with an amount of reduction substance in exhaust gas, except the change in the engine output torque caused in the specified period of time of an expansion stroke by the reduction substance increasing means, caused by the reduction substance increasing means. The engine control system thus constructed selectively uses the first estimating means and the second estimating means according to the magnitude of a change in engine output torque in the specified period of time of an expression stroke to estimate the increase in the reduction substance content of exhaust gas. Accordingly, the estimate of an increase in the amount of reduction substance is precisely made regardless of the amount of reduction substance in exhaust gas that is to be increased by the reduction substance increasing means. In addition, the engine control system comprises the first estimating means for estimating an increase in the amount of reduction substance in exhaust gas on the basis of a change in the engine output torque caused at least in the specified period of time of an expansion stroke by the reduction substance increasing means and the second estimating means for estimating an increase in the amount of reduction substance in exhaust gas on the basis of a change in a value associated with an amount of reduction substance in exhaust gas, except the change in the engine output torque caused in the specified period of time of an expansion stroke by the reduction substance increasing means, caused by the reduction substance increasing means. The engine control system thus constructed selectively uses the first diagnostic means and the second diagnostic means according to a post fuel injection timing. Accordingly, the diagnosis of abnormality is always precise regardless of the amount of reduction substance in exhaust gas that is to be increased by the reduction substance increasing means.

The foregoing and other objects and features of the present invention will be understood from the following description in accordance with preferred embodiments thereof when reading in connection with the accompanying drawings in which parts and elements denoted by the same reference numbers are same or similar in structure and operation throughout the drawings, and wherein:
Figure 1 is a view showing an overall structure of a diesel engine equipped with an engine control system;
Figure 2 is a time chart illustrating control patterns of fuel injection of main fuel injection;
Figure 3 is a graphic chart showing effect of the number of fuel shots of the split fuel injection for the main fuel injection and injection interval Δt on the HC content of exhaust gas;
Figure 4 is a flow chart illustrating a sequence routine of estimate control of an increase in HC (a reduction substance) and abnormality diagnostic control;
Figure 5 is a graphic chart showing a change in cylinder pressure caused by post fuel injection after batch fuel injection or by multiple step fuel injection;
Figure 6 is a flow chart illustrating a sequence routine of changing and modifying control of combustion control pattern;
Figure 7 is a flow chart illustrating another sequence routine of changing and modifying control of combustion control pattern;
Figure 8 is a graphic chart showing the relationship between NOx conversion efficiency and temperature of NOx catalytic converter;
Figures 9A and 9B are respective parts of a flow chart illustrating another sequence routine of abnormality diagnosis;
Figure 10 is a graphic chart showing engine output torque before and after recirculation of reduction substance increased in amount into a combustion chamber;
Figure 11 is a flow chart illustrating a sequence routine of selection control for abnormality diagnostic control; and
Figure 12 is a flow chart illustrating a sequence routine of selection control of reduction substance increased amount estimating means.

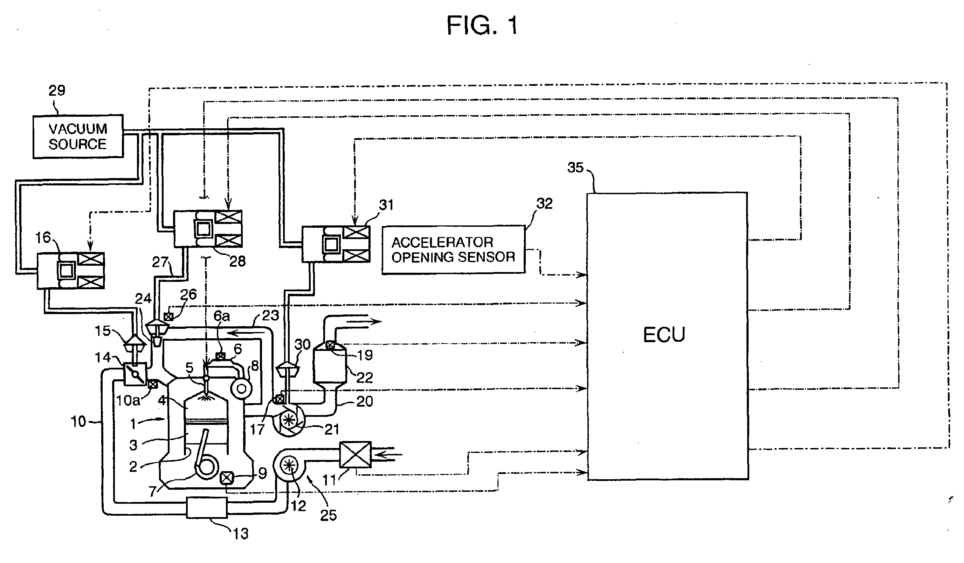

Referring to the drawings in detail and, in particular, to Figure 1, an engine control system A according to an embodiment of the present invention is schematically shown as installed to a multi-cylinder diesel engine 1 mounted on a vehicle. The engine body 1 has a plurality of cylinders 2 (only one of which is depicted) in which pistons 3 are received to slide up and down. A combustion chamber 4 is formed by the cylinder 2 and the piston 3. A fuel injector 5 is disposed so as to have its nozzle extended down at the center of the combustion chamber 4. The fuel injector 5 is pulsed at an appropriate timing to spray fuel directly into the combustion chamber 4. A common rail 6 is disposed as an accumulator for accumulating fuel therein to which the fuel injector 5 is connected. A high pressure fuel pump 8 is connected to the common rail 6 and is driven by a crankshaft 7. The common rail 8 is provided with a pressure sensor 6a for monitoring fuel pressure in the common rail 6. The high pressure fuel pump 8 is operated so as to keep the fuel pressure in the common rail 6 higher than a specified level of pressure. The engine 1 is provided with a crank-angle sensor 9 for monitoring a rotational angle of the crankshaft 7. The crank-angle sensor 9 may comprise an electromagnetic pick-up facing to a periphery of a rotary disk secured to the crankshaft 7 with notches or projections formed and arranged at regular angular intervals in the periphery thereof so as to provide a pulse signal every time it detects one of the notches or the projections.

Air is filtered by an air cleaner (not shown) and is introduced into the combustion chamber 4 through an intake air passage 10 having a surge tank (not shown). The intake air passage 10 after the surge tank is connected to an intake port of each combustion chamber 4 through an intake manifold. A pressure sensor 10a is provided in the surge tank to monitor supercharging pressure of the intake air into the combustion chamber 4. As shown, the intake air passage 10 is provided, in order from the upstream end to the downstream end, with a hot-film type of air flow sensor 11 operative to monitor a flow rate of intake air, a blower 12 of a turbocharger 25 (which will be described later) which is driven by a turbine 21 of the turbocharger 25 to compress intake air, an inter-cooler 13 operative to cool the compressed air from the blower 12, and an intake throttle valve 14 operative as intake air regulation means to vary the cross sectional area of the intake passage 10. The intake throttle valve 14 comprises a butterfly valve having a passage which allows intake air to flow passing through even while it is fully closed. The intake throttle valve 14 is accompanied by a diaphragm 15 and an opening sensor (not shown). The diaphragm 15 regulates an opening of the intake throttle valve 14 according to negative pressure applied thereto and regulated by an electromagnetic valve 16.

An exhaust gas passage 20 is connected to an exhaust port of each combustion chamber 4 through an exhaust manifold. The exhaust gas passage 20 is provided, in order from the upstream end to the downstream end, with a linear oxygen (O₂) sensor 17 operative to monitor the amount of oxygen in exhaust gas, the turbine 21 driven by exhaust gas, and a catalytic converter 22 operative to lower emission levels of HC, NO and NOx in exhaust gas so as thereby to purify the exhaust gas. The catalytic converter 22 at its outlet end is accompanied by a temperature sensor 19 for monitoring the temperature of exhaust gas. The catalytic converter 22 is of a type comprising a converter shell and a cordierite honeycomb bed of honeycomb construction received in the converter shell. The honeycomb bed is formed with a number of through bores arranged in parallel to one another, each bore being coated with catalyst layers on its walls. The catalyst layer is prepared by coating and supporting catalyst powder, which, for example, comprises Pt particles supported on zeolite particles and solidified by a spray and dry method, onto the honeycomb bed with a binder. The catalyst shows catalytic activity to reduction of NOx in exhaust gas with a reduction substance such as HC even in circumstances where the oxygen density of exhaust gas is high (higher than 4%), *i.e.* a fuel mixture is leaner than a stoichiometric mixture (A/F ≧ 18), and also shows catalytic activity to oxidization of HC. That is, the catalyst works as a three-way catalyst at air-to-fuel ratio near the stoichiometric ratio.

A exhaust gas recirculation passage 23 (which is hereafter referred to as an EGR passage) branches off from the exhaust gas passage 20 upstream from the linear oxygen (O₂) 17 and is connected to the intake air passage 10. Exhaust gas is partly admitted into an intake air flow in the intake air passage 10 from the exhaust gas passage 20. The EGR passage 23 near the downstream end is provided with an exhaust gas recirculation control valve (which is referred to as an EGR control valve) 24 operative to regulate the amount of exhaust gas that is recirculated into the intake air flow. The EGR valve 24, which is of negative pressure operated type and accompanied by a valve lift sensor 26, has a valve body with a negative pressure chamber connected to a negative pressure passage 27. The negative pressure chamber 27 leads to a vacuum pump 29 as a negative pressure source through a negative pressure controlling electromagnetic valve 28. The electromagnetic valve 28 is controlled with a control signal from an en engine control unit (which is referred to as ECU) 35 to open and shut the negative pressure passage 27 so as thereby to regulate operating negative pressure in the negative pressure chamber for driving EGR valve 24. By this way, the EGR passage 23 is linearly regulated in opening.

A variable geometry type of turbocharger (VGT) is employed for the turbocharger 25 in this embodiment. The variable geometry turbocharger 25 is accompanied by a diaphragm 30. Negative pressure applied to the diaphragm 30 is regulated by a negative pressure controlling electromagnetic valve 31 so as to vary the cross sectional area of the exhaust gas passage 20.

ECU 35 provides at least the fuel injector 5, the high pressure fuel pump 8, the intake throttle valve 14, the EGR valve 24 and the turbocharger 25 with control signals, respectively, for operating and controlling them. Further, ECU 35 receives signals provided by at least the pressure sensor 6a, the crank-angle sensor 9, the pressure sensor 10a, the air flow sensor 11, the linear oxygen (O₂) sensor 17, the temperature sensor 19, the valve lift sensor 26 and a accelerator opening sensor 32 which monitors a travel of an accelerator (not shown) as an accelerator opening. ECU 35 controls an amount of fuel sprayed through the fuel injector 5 and a timing of fuel injection of the fuel injector 5 according to both engine operating condition and condition of the NOx purifying catalyst of the catalytic converter 22. ECU 35 additionally controls pressure of fuel that is pressurized by the high pressure fuel pump 8, i.e. pressure in the inside of the common rail 6. In addition, ECU 35 controls independently the intake throttle valve 14 to regulate an amounts of intake air passing through the throttle valve 14, EGR valve 24 to regulate exhaust gas admitted into the intake air flow, and the turbo-charger 24.

The engine control system controls an increase in the reduction substance (HC, etc.) content of exhaust gas by shifting engine operation between different combustion control patterns in a specified engine operating condition. The engine control system further performs abnormality diagnosis, namely diagnosis of a failure in estimate of an increase in the reduction substance content by monitoring a change in engine output torque at least in a specified period of time of an expansion stroke when the control of an increase in the reduction substance content is implemented and performs a correction of an increased reduction substance content of exhaust gas.

Specifically, in order to perform the fuel injection control, ECU 35 bears a main fuel injection control map defining an optimum amount of fuel injection Qb relative to target engine output torque and an rotational speed of the engine (engine speed) that has been experimentally determined. Data of the optimum amounts of fuel injection is stored in a memory built in ECU 35. ECU 35 reads out data of the amount of main fuel injection Qb from the fuel injection control map according to target engine output torque represented by a signal from the accelerator opening sensor 32 and an engine speed represented by a signal from the crank-angle sensor 9, and then determines a pulsing duration of the fuel injector 5 according to the amount of main fuel injection Qb and a fuel pressure in the common rail 6 represented by a signal from the pressure sensor 6a. The fuel injector 5 sprays an amount of fuel meeting the target engine output torque through the main fuel injection control so as to provide a mean air-to-fuel ratio in the combustion chamber 4 (which is hereafter referred to as a mean combustion chamber air-to-fuel ratio) equal to or greater than 18 which is quite lean. The main fuel injection is performed in two different control patterns, a batch (one-shot) fuel injection in which a given amount of fuel is sprayed at one time and a multi-shot fuel injection in which a given amount of fuel is divided into parts and sprayed through a plurality of shots. While ordinarily driving with a small change in accelerator opening, the multi-shot fuel injection is implemented in principle by a two-shot fuel injection and a three-shot fuel injection when the amount of reduction substance in exhaust gas is intended to increase.

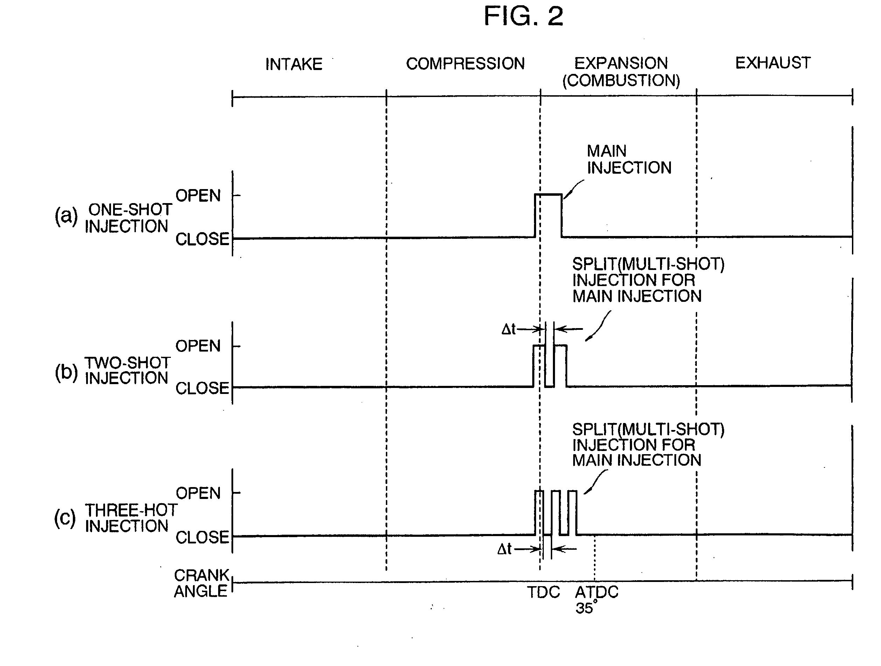

Referring to Figure 2 showing control patterns of the main fuel injection by way of example, in the main fuel injection, a given amount of fuel is sprayed through (a) one-shot fuel injection so as to continue combustion at a timing near a top dead center of a compression stroke, or through (b) two-shot fuel injection or (c) three-shot fuel injection. In the two- or three-shot fuel injection, the fuel injector 5 is preferably pulsed to maintain open a time less than approximately 800 µsecs., and to have an injection interval Δt of approximately 50 µsecs. to approximately 1000 µsecs. Between adjacent shots. The second shot of fuel injection is preferred to be made after the top dead center of a compression stroke. The given amount of fuel may be divided into more-than-three parts and sprayed intermittently through multi-shot fuel injection.

The multi-shot fuel injection is basically performed as follows. A fuel spray from the fuel injector 5 spreads as a whole in the combustion chamber 4 forming a conic shape of spray, and then is made fine fuel drops repeating breaking up due to frictional contact with air. The fuel drop evaporates and turns to fuel vapors. At this time, since the given amount of fuel is divided into parts and sprayed intermittently through a plurality of shots, the proportion of premixed combustion on the first shot of fuel is relatively small, so that combustion pressure and temperature are prevented from rising in excess in an early stage of combustion. This results in a decrease in NOx generation. The injection interval Δ t set greater than 50 µsecs. prevents almost all fuel drops of a part of fuel sprayed following a preceding part of fuel from catching up fuel drops of the preceding part of fuel. In particular, when making a second-shot fuel injection at a timing after the top dead center of a compression stroke, fuel sprayed through the second-shot fuel injection is immediately burned. As a result, the temperature in the combustion chamber 4 immediately rises and the viscosity of compressed air in the combustion chamber 4 increases, and then the fuel sprayed through a third-shot fuel injection is immediately subjected to a drag on progress of a change into fuel drops, so that fuel drops of a part of fuel splayed through the third-shot fuel injection do not catch up the fuel drops of the preceding part of fuel sprayed through the second shot fuel injection. The duration of each shot of fuel injection less than approximately 800 µsecs. provides a small amount of fuel injection. This restrains fuel drops from recombining with one another to a minimum during spraying fuel. Accordingly, it is possible to significantly improve a mixed condition of fuel vapors with air by, for example, increasing a fuel injection velocity under increased fuel pressure so as thereby to accelerate changing fuel into fine drops and vaporization and atomization of the fuel. The injection interval Δt less than 1000 µsecs. causes fuel to start burning before completion of combustion of the fuel sprayed through a preceding shot of fuel injection. This prevents discontinuous combustion of fuel sprayed through the multi-shot fuel injection. In short, it is realized to improve fuel efficiency and to restrain smoke generation by significantly improving the combustion condition of fuel which is achieved by implementing the multi-shot fuel injection for the main fuel injection. Further, because, while implementing the multi-shot fuel injection relatively retards completion of the main fuel injection, vaporization and atomization of fuel intermittently sprayed during the multi-shot fuel injection is so satisfactory as to cause diffusion combustion, there is no occurrence of aggravation of combustion condition likely when correctly retarding a fuel injection timing. The multi-fuel injection rather causes effective transmission of expansion force of burned gas to the piston 3 due to a high pressure in the combustion chamber 4 spent for a long time. As a result, the improvement of fuel efficiency is further consolidated due to an increase in mechanical efficiency. The HC content of exhaust gas is different according to the number of parts into which a given amount of fuel for the main fuel injection is divided and the injection interval Δt.

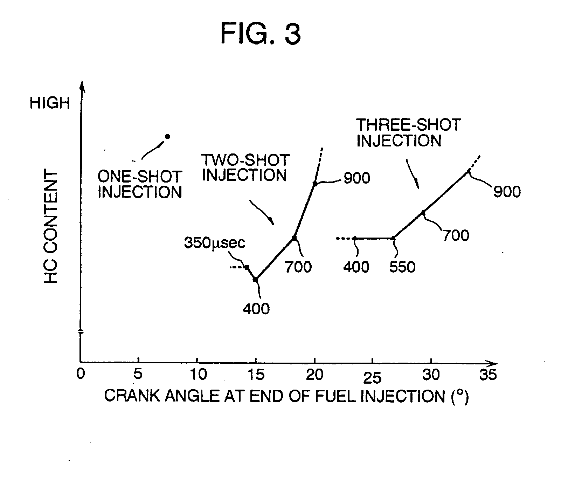

Figure 3 shows a result of an examination into an effect of the number of shots of the split fuel injection for the main fuel injection and injection interval Δt on the HC content of exhaust gas. The examination was made on the one-shot fuel injection in which a given amount of fuel is sprayed all at once at a time near a top dead center of a compression stroke, the two-shot fuel injection, and the three-shot fuel injection. In each examination, the HC content of exhaust gas and crank angles at completion of the fuel injection were measured for various injection intervals Δt. Specifically, the injection interval Δt were set to 350, 400, 700 and 900 µsecs. in the two-shot fuel injection, and 400, 550, 700 and 900 µsecs. in the three-shot fuel injection. As apparent in Figure 3, the multi-fuel fuel injection provides an increase in the HC content as compared with the one-shot fuel injection, the higher the HC content is, the greater the number of shots becomes or the longer the injection interval becomes.

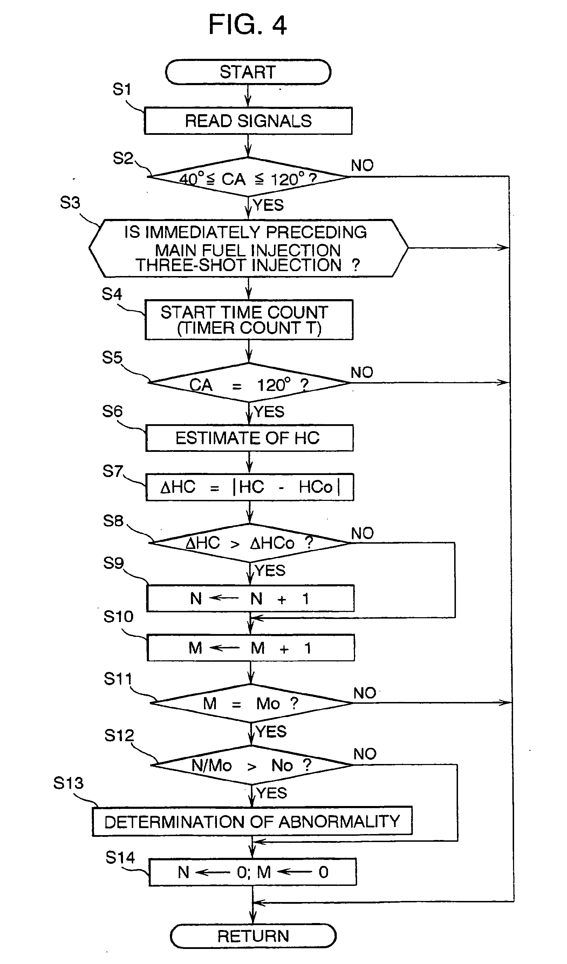

Figure 4 is a flow chart illustrating a sequence routine of estimating an increase in the HC (reduction substance) content of exhaust gas by first estimating means and performing diagnosis of failures of the first estimating means by first diagnostic means. This sequence routine is repeated every specified crank angle. When the sequence logic commences and control proceeds to a block at step S 1 where ECU 35 reads signals from at least the crank-angle sensor 9. Subsequently, when it is judged at step S2 that the crank angle CA is within a specified period of time of an expansion stroke which is between crank angles of 40° and 120° after a top dead center of the expansion stroke (which is hereafter referred to as crank angles of ATDC 40° and ATDC 120°), a judgement is made at step S3 as to whether the three-shot fuel injection is implemented immediately before the specified period of time of expansion stroke is reached. When it is judged that the three-shot fuel injection is implemented immediately before the specified period of time of expansion stroke is reached, then a counter starts and continues counting a time T at step S4 until it is judged at step S5 that the crankshaft 7 rotates through a rotational angle of ATDC 120°. When the answer to the respective judgement made at step S2, S3 and S5 is negative, then the step orders return for another implementation of the sequence routine The timer count T is counted until the crank angle of ATDC 120° is reached.

The timer count T is counted to monitor amplitude of engine output torque in the specified period of time of an expansion stroke between the between crank angles of ATDC 40° and ATDC 120° after the top dead center of an expansion stroke when the control is implemented to increase the reduction substance content by shifting the fuel injection control pattern from the two-shot fuel injection to the three-shot fuel injection. In this instance, the amplitude of engine output torque is represented by the timer count T. Accordingly, the greater the time count T is, the lower an angular velocity of the crankshaft 7, and hence the engine output torque, is. The angular velocity of the crankshaft 7, and hence the amplitude of engine output torque, between the crank angles of ATDC 40° and ATDC 120° is detected on the grounds that it depends upon how large after-burning occurs after diffusion combustion whether the reduction substance content of exhaust gas increases or decreases. That is, the engine control system of the present invention monitors a proportion of fuel remaining unburned that is contributive to an increase in the reduction substance content of exhaust gas by monitoring the amplitude of engine output torque caused by the after-burning. While the after-burning is one of phenomena occurring generally after a crank angle of ATDC 30°, it is rather difficult to detect a precise amplitude of engine output torque caused by the after-burning because there is a great effect of premixed combustion at an early stage of combustion and diffusion combustion subsequent to the premixed combustion on the amplitude of engine output torque before crank angles of ATDC 40°. It is thought that the after-burning hardly occurs after a crank angle of ATDC 120°.

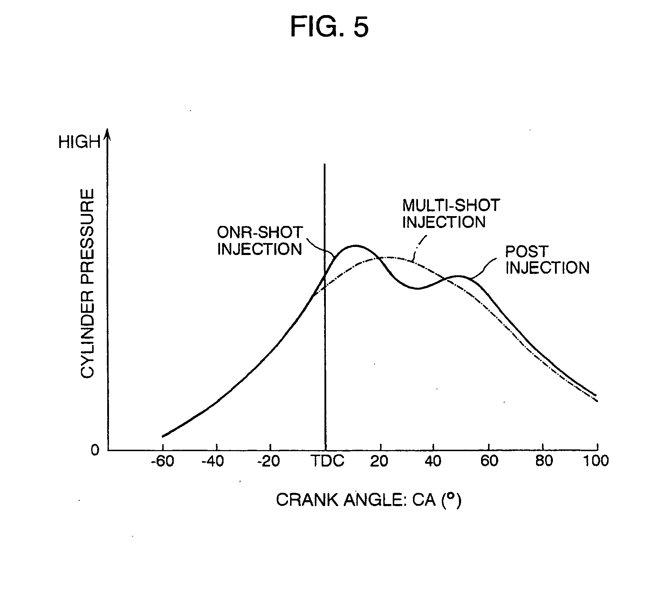

Figure 5 shows a change in cylinder pressure with time in the case where fuel is sprayed through post fuel injection at a timing near a crank angle of ATDC 35° after spraying fuel through the one-shot fuel injection starting at a crank angle of 5° before the top dead center and in the case where fuel is sprayed through the three-shot fuel injection starting at a crank angle of BTDC 5°. The cylinder pressure shows, in the case of implementing the post fuel injection following the one-shot fuel injection, a first peak due to the one-shot fuel injection which appears near an crank angle of ATDC 5° and thereafter a second peak due to the post fuel injection after an crank angle of ATDC 40°. Because the second peak changes its amplitude depending upon the reduction substance content of exhaust gas, the engine control system detects engine output torque meeting the amplitude of a second peak of cylinder pressure. On the other hand, the cylinder pressure shows, in the case of implementing the three-shot fuel injection, a first peak lower in amplitude then the first peak due to the one-shot fuel injection. In the later case, while the cylinder pressure does not show any peak other than the first peak, the changing rate of cylinder pressure varies depending upon the reduction substance content of exhaust gas after a crank angle of ATDC 40°. For this reason, the engine control system detects engine output torque after the crank angle of ATDC 40°.

Referring back to Figure 4, an increase in the reduction substance content of exhaust gas is estimated on the basis of the timer count T at step S6. This estimate is made by reading in an increase in HC content of exhaust gas, i.e. an amount of unburned HC, that is mapped as an experimental measurement with respect to engine operating condition and electronically stored in the memory of ECU 35. In the map, the HC content is defined so as to become larger as the timer count T becomes larger, in other words the engine output torque becomes lower. This estimate provides an estimated increase in the HC content of exhaust gas due to a change in fuel injection control pattern on the basis of the amplitude of a difference between a measured timer count T during the three-shot fuel injection under an engine operating condition and standard timer count Tr expected during the two-shot fuel injection under the same engine operating condition (which represents a change in engine output torque).

Subsequently, after calculating a difference ΔHC of the estimated increase in HC content HC from a predetermined reference value HCo at step S7, a judgement is made at step S8 as to whether the HC content difference Δ HC is greater than a predetermined reference value Δ HCo. The reference value HCo refers to an increase in the HC content of exhaust gas that is expected while increasing the reduction substance content of exhaust gas is under normal control. The reference Δ HCo refers to an upper limit for regarding the control of increasing the reduction substance content of exhaust gas as being normal. After changing a frequency of occurrences of abnormal control N by an increment of 1 (one) when the HC content difference Δ HC is greater than the reference value Δ HCo at step S9 or without changing the frequency of occurrences of abnormal control N, a monitoring frequency M, which refers to a repetition frequency of monitoring an change in the HC content of exhaust, is changed by an increment of 1 (one) at step S10. Thereafter, a judgement is made at step S11 as to whether the monitoring frequency M has reached a predetermined reference monitoring frequency Mo. The sequence logic through steps S1 to S10 is repeated until the sequence logic is repeated a number of times represented by the reference monitoring frequency Mo. When the sequence logic is repeated the number of times represented by the reference monitoring frequency Mo, another judgement is made at step S12 as to whether a ratio of the frequency of occurrences of abnormal control N relative to the reference monitoring frequency Mo (abnormality occurrence ratio) is greater than a reference ratio No. If the abnormality occurrence ratio N exceeds the reference ratio No, it is decided that the control of increasing the reduction substance content of exhaust gas is abnormal and a warning is made at step S13. When the abnormality occurrence ratio No is less than the reference ratio No or after having made the decision of abnormality, the frequency of occurrences of abnormal control N and the monitoring frequency M are reset to zero at step S14, and then the final step orders return for another sequence routine.

Although the diagnosis of abnormality is made based on an estimated HC content of exhaust gas in the above embodiment, abnormalities may be decided on the basis of a timer count T. Specifically, an occurrence of abnormal control is decided when the timer count T exceeds a limit value and the, when an abnormality occurrence ratio (which is a ratio of the frequency of occurrences of abnormal control N relative to a reference monitoring frequency Mo) exceeds the reference ratio No, the control of increasing the reduction substance content of exhaust gas is abnormal.

The estimate of an increase in the reduction substance content of exhaust gas and abnormality diagnostic control can be performed in the case where the reduction substance content of exhaust gas is increased by shifting fuel injection from a control pattern in which the post fuel injection is made in addition to and after the main fuel injection (the one-shot fuel injection or the multi-shot fuel injection) to a control pattern in which only the main fuel injection is made in the same manner as described above. In this case, the judgement made at step S3, which regards the fuel injection control pattern implemented immediately before the specified period of time of expansion stroke, is changed from the three-shot fuel injection to the post fuel injection.

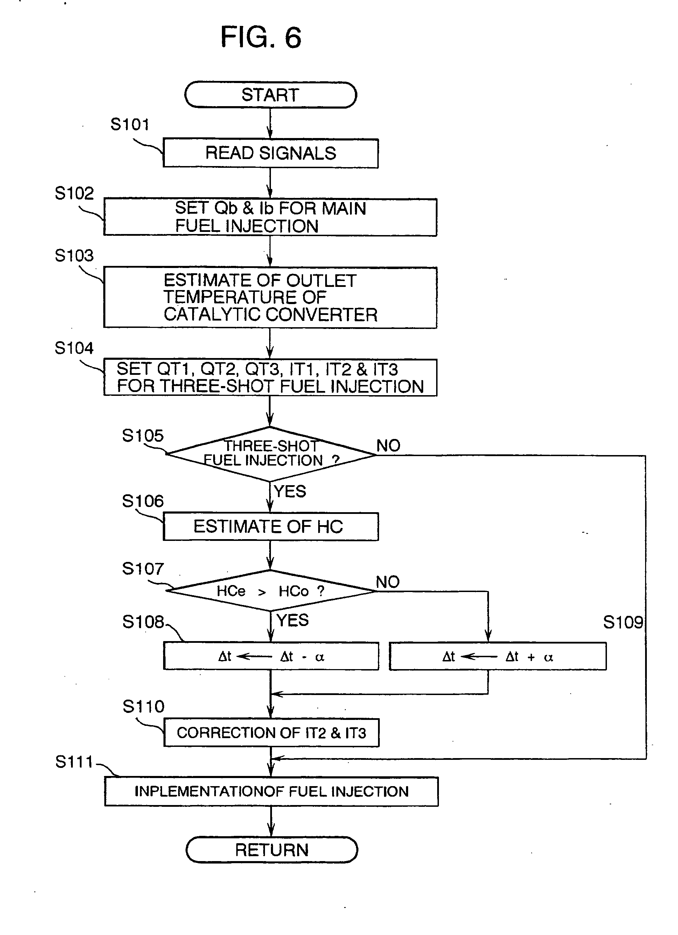

Figure 6 shows a flow chart illustrating a sequence routine of control of changing a fuel injection control pattern for increasing and correcting the HC (reduction substance) content of exhaust gas. This sequence routine is repeated every specified crank angle. When the sequence logic commences and control proceeds to a block at step S101 where ECU 35 reads signals from at least the crank-angle sensor 9, the air flow sensor 11, the accelerator opening sensor 32 and the temperature sensor 19. Subsequently, an optimum amount of main fuel injection Qb and a main fuel injection timing Ib are set at step S102. The optimum amount of main fuel injection Qb is read from the main fuel injection control map defining an optimum amount of fuel injection Qb relative to target engine output torque represented by an accelerator opening and an engine speed represented by a crank angle of rotation. The main fuel injection timing Ib is set to a point of time near the top dead center of a compression stroke. Specifically, the main fuel injection timing Ib is advanced from, for example, a crank angle of BTDC 5° as a standard main fuel injection timing as the amount of main fuel injection Qb increases or is retarded as the amount of main fuel injection Qb decreases. The main fuel injection timing Ib is additionally retarded by a specified value when engine cooling water is at a low temperature. Thereafter, an outlet temperature of the catalytic converter 22 is estimated based on the signal from the temperature sensor 19, which represents the temperature of exhaust gas, at step S103. The temperature of exhaust gas represented by the signal from the temperature sensor 19 may be substituted for the outlet temperature of the catalytic converter 22 or may be changed by application of a corrective coefficient that is experimentally determined. Otherwise, the outlet temperature may be estimated on the basis of a present engine operating condition and a driving record.

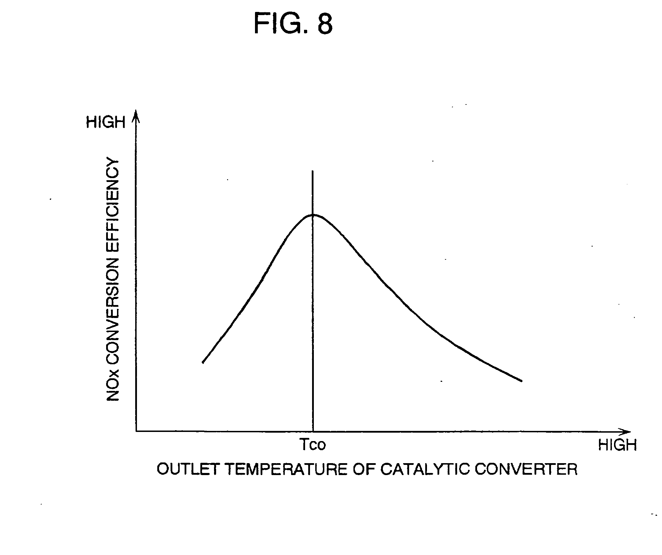

At step S104, the multi-shot fuel injection is set to an appropriate control pattern. As diagrammatically shown in Figure 8, the NOx catalyst has a peak temperature Tco at which a peak of catalytic activity appears and shows NOx conversion efficiency gradually falling down on both sides of the peak temperature Tco. Therefore, the two-shot fuel injection is employed for outlet temperatures of the catalytic converter 22 higher than the peak temperature Tco. On the other hand, the three-shot fuel injection is employed for outlet temperatures of the catalytic converter 22 equal to or lower than the peak temperature Tco in order to increase the reduction substance content of exhaust gas that is supplied to the NOx catalyst for accelerating activation of the NOx catalyst due to heat of oxidizing reaction. In other word, the three-shot fuel injection is employed in order to change the outlet temperature of the catalytic converter 22 toward the peak temperature Tco. Specifically, in the two-shot fuel injection, the given amount of main fuel injection Qb is equally divided into two parts Qb1 and Qb2 for first shot fuel injection at a first shot fuel injection timing Ib1 and second shot fuel injection at a second shot fuel injection timing Ib2. An injection interval Δt is set between, for example, approximately 50 µsecs. and approximately 500 µsecs. The two-shot fuel injection with the injection interval provides better improvement of fuel efficiency as compared with the one-shot fuel injection (see Figure 3). Similarly, in the three-shot fuel injection, the given amount of main fuel injection Qb is equally divided into three parts Qb1, Qb2 and Qb3 for first shot fuel injection at a first shot fuel injection timing Ib1, second shot fuel injection at a second shot fuel injection timing Ib2 and third shot fuel injection timing Ib3. An injection interval Δt between each adjacent shots is set between, for example, approximately 50 µsecs. and approximately 500 µsecs. The three-shot fuel injection with the injection interval provides better improvement of fuel efficiency as compared with the two-shot fuel injection (see Figure 3).

Subsequently, a judgement is made at step S105 as to whether the three-step fuel injection is presently implemented. When the three-step fuel injection is presently implemented, then, an increase in the HC content of exhaust gas HC is estimated at step S106 and compared with the predetermined reference value or expected value HCo at step S107. In this instance, the estimated increase in the HC content of exhaust gas HC depends upon engine output torque in a specified period of time of an expansion stroke between, for example, crank angles of ATDC 40° and ATDC 120° while the three-shot fuel injection is implemented. When the increase in the HC content of exhaust gas HC exceeds the reference value HCo, then, the injection interval Δt is shortened by a time α at step S108 so as to change the second and third shot fuel injection timings Ib2 and Ib3 at step S110. On the other hand, when the increase in the HC content of exhaust gas HC is less than the reference value HCo, then, the injection interval Δt is prolonged by the time α at step S109 so as to change the second and third shot fuel injection timings Ib2 and Ib3 at step S110. That is, the injection interval Δt is shortened so as to restrain an increase in the HC content of exhaust gas when the increase in the HC content of exhaust gas HC is greater than the expected increase or is prolonged so as to intensify an increase in the HC content of exhaust gas when the increase in the HC content of exhaust gas HC is less than the expected increase (see Figure 3). After changing the injection interval Δ t at step S110, the three-shot fuel injection is implemented at step S111.

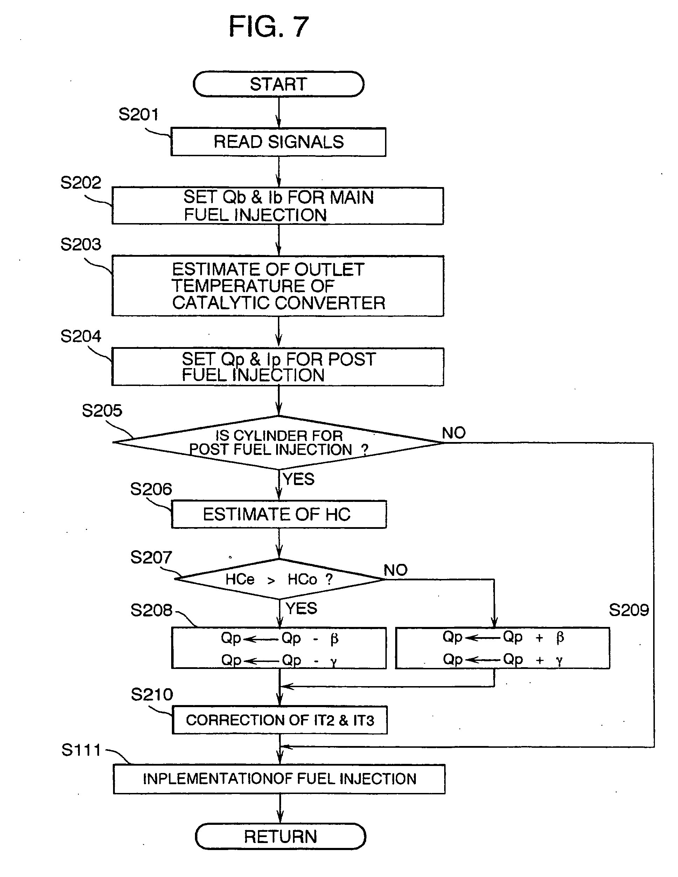

Figure 7 shows a flow chart illustrating another sequence routine of the control of changing a fuel injection control pattern for increasing and correcting the HC content of exhaust gas. When the sequence logic commences and control proceeds to a block at step S201 where ECU 35 reads signals from at least the crank-angle sensor 9, the air flow sensor 11, the accelerator opening sensor 32 and the temperature sensor 19. Subsequently, an optimum amount of main fuel injection Qb and a main fuel injection timing Ib are set at step S202. After estimating an outlet temperature of the catalytic converter 22 based on the signal from the temperature sensor 19 at step S203, an amount of post fuel injection Qp and a post fuel injection timing Ip are set on the basis of an engine operating condition and the outlet temperature of the catalytic converter 22 at step S204. The amount of post fuel injection is read out from a post fuel injection control map, similar to the main fuel injection control map, which defines an optimum amount of post fuel injection Qp relative to an accelerator opening and an engine speed that has been experimentally determined. The post fuel injection map is such as to provide the amount of post fuel injection becomes larger as the accelerator opening becomes larger and as the engine speed becomes higher. Data of the optimum amounts of fuel injection Qp is stored in a memory built in ECU 35. The amount of post fuel injection Qp read out from the post fuel injection control map is employed as it is when the catalytic converter 22 is at an outlet temperature near the peak temperature Tco at which it shows a peak of catalytic activity, However the amount of post fuel injection Qp is increased so as to increase the HC content of exhaust gas supplied to the catalytic converter 22 when the catalytic converter 22 is at an outlet temperature lower than the peak temperature Tco or is decreased so as to restrain a rise in the outlet temperature of the catalytic temperature and to force it toward the peak temperature when the catalytic converter 22 is at an outlet temperature higher than the peak temperature Tco. The post fuel injection timing Ip is advanced in a range of crank angles between, for example, ATDC 40° and ATDC 120° as an engine load becomes higher. The post fuel injection is not implemented following the main fuel injection for each cylinder but is implemented at a frequency, such as once every five times of main fuel injection to once every 25 times of main fuel injection, while the main fuel injection is repeated for the cylinders in the predetermined firing order. This skip post fuel injection is employed on the grounds that, when the post fuel injection is implemented following every main fuel injection, the amount of post fuel injection is too small to perform precise control of fuel injection and that the NOx catalytic converter 22 has a tendency to elevate the NOx conversion efficiency while the reduction substance content of exhaust gas is intermittently increased.

Subsequently, when a cylinder for which the fuel injection control is being implemented is one that should be additionally supplied with fuel through the post fuel injection at step S205, an increase in the HC content of exhaust gas HC is estimated on the basis of engine output torque in a specified period of time of an expansion stroke between, for example, crank angles of ATDC 40° and ATDC 120° at step S206, and is compared with the predetermined reference value HCo at step S207. When the estimated HC content of exhaust gas exceeds the reference value HCo, then, the amount of post fuel injection Qp is decreased by a predetermined amount β and the post fuel injection timing Ip is advanced by a predetermined time γ at step S208. On the other hand, when the estimated HC content of exhaust gas is less than the reference value HCo, then, the amount of post fuel injection Qp is increased by the amount β and the post fuel injection timing Ip is retarded by the time γ at step S209. After correcting the amount of post fuel injection Qp and the post fuel injection timing Ip at step S208 or step S209. The post fuel injection is implemented at step S210.

In this control, an increase in the amount of post fuel injection Qp causes an increase in the HC content of exhaust gas or a decrease in the HC content of exhaust gas. Advancement of the post fuel injection timing Ip causes an increase in proportion of after burning fuel with the result of reducing the HC content of exhaust gas. On the other hand, retardation of the post fuel injection Ip causes a decrease in proportion of after burning fuel with the result of increasing the HC content of exhaust gas. There is another intention for decreasing the amount of post fuel injection Qp when the post fuel injection timing Ip is advanced to prevent engine output torque from rises in excess because the engine output torque rises higher than demanded torque when the proportion of after burning fuel increases.

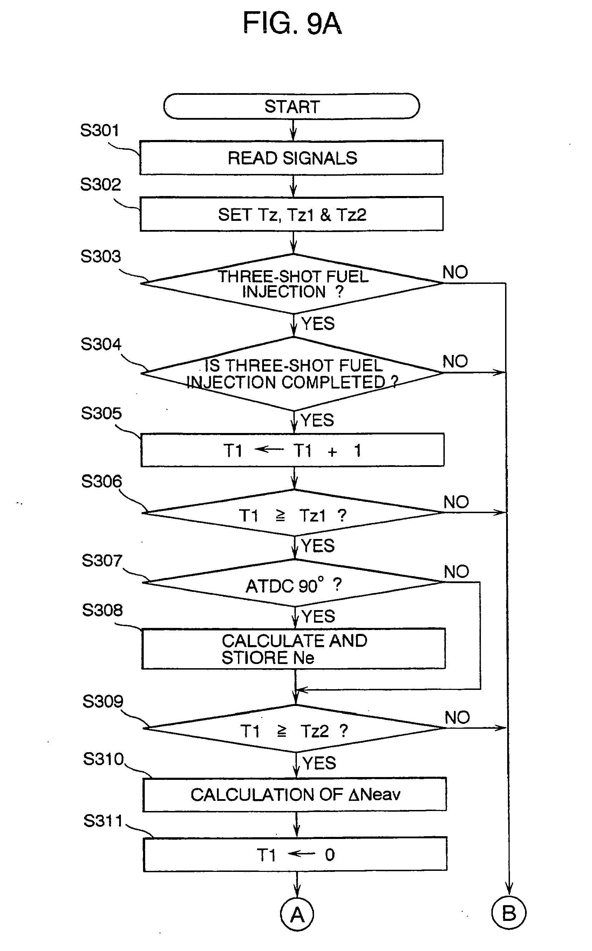

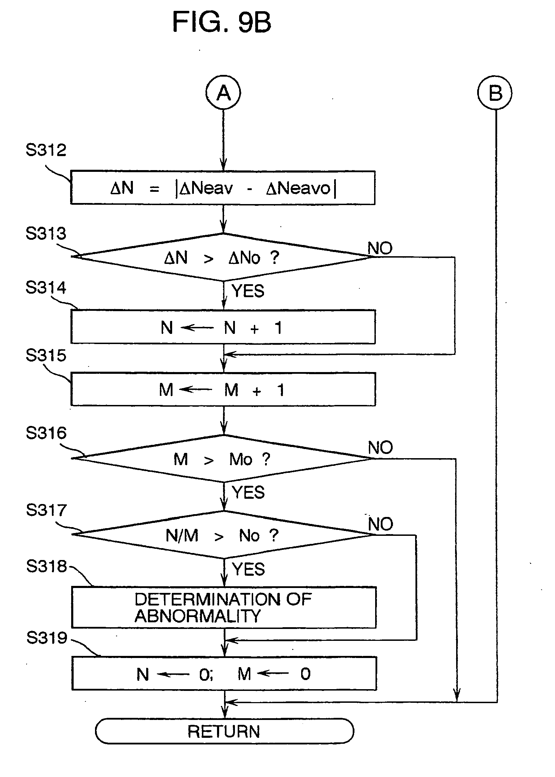

Figures 9A and 9B are a flow chart illustrating another sequence routine of estimating an increase in the HC (reduction substance) content of exhaust gas by second estimating means and performing diagnosis of failures of the second estimating means by second diagnostic means. When the sequence logic commences and control proceeds to a block at step S301 where ECU 35 reads signals from at least the crank-angle sensor 9, the air flow sensor 11 and the accelerator opening sensor 32. Subsequently, an influential period of time Tz is set at step S302. The influential period of time Tz refers to a period of time in which an influence of an increase in the HC content of exhaust gas that is caused by the three-shot fuel injection appears in engine output torque. When the three-shot fuel injection is implemented, the exhaust gas increases the HC content thereof. The exhaust gas is partly recirculated into the intake air passage 10 and introduced into the combustion chambers of the cylinders which are in an intake stroke, so that HC in the recirculated exhaust gas are burned together with fuel sprayed by the fuel injector 5. Accordingly, there is a time lag before an influence of an increase in the HC content of exhaust gas appears in engine output torque. The influential period of time Tz is defined as a time length from a time (influence appearing time) Tz1 at which the influence appears in engine output torque after starting the three-shot fuel injection to a time (influence disappearing time) Tz2 at which the influence disappears. The influence appearing and disappearing times Tz1 and Tz2 are mapped as experimental measurements with respect to an engine speed of operation and an accelerator opening, and electronically stored in the memory of ECU 35. In the map, each time Tz1, Tz2 is made earlier as the engine speed becomes higher and as the accelerator opening becomes larger. Further, the influential period of time Tz is made shorter as the engine speed becomes higher and as the accelerator opening becomes larger.

Subsequently, judgements are made at steps S303 and S304 as to whether the three-shot fuel injection has started and been completed, respectively. When it is judged that the three-shot fuel injection has been completed, then after changing a timer count T by an increment of 1 (one) at step S305, a judgement is made at step at S306 as to whether the timer count T has reached or excesses the influence appearing time Tz1. When the timer count T has reached or excesses the influence appearing time Tz1, another judgement is made at step S307 as to whether a stroke of a cylinder 2 in an expansion stroke is at an crank angle of ATDC 90°. At a time the stroke of the cylinder 2 reaches a crank angle of ATDC 120°, a change in engine speed (engine speed change) Δ Ne is calculated as a change in engine output torque on the basis of the signal from the crank-angle sensor 9 during a progress in rotation of the crankshaft from an crank angle of ATDC 0° to an crank angle of ATDC 90° and is stored in the memory of ECU 35 at step S308. The engine speed change Δ Ne is continuously calculated and stored until the timer count T1 reaches the influence disappearing time Tz2 by making a judgement at step S309.

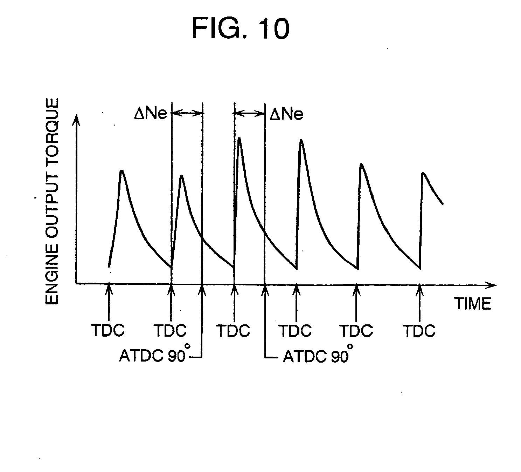

As shown in Figure 10, a change in engine output torque is defined by a difference of engine output torque at a crank angle of ATDC 90° of a compression stroke from engine output torque at a crank angle at a TDC of the compression stroke. Since the angular velocity of rotation of the crankshaft becomes higher as the engine output torque becomes greater and a period of time between crank angles of TDC and ATDC 90° of a compression stroke becomes shorter in consequence, in other words, an engine speed Δ Ne is made small in the period of time, the engine speed change Δ Ne meets the change in engine output torque.

Thereafter, an average engine speed change Δ Neav is calculated between the engine speed changes Δ Ne sampled in the influential period of time Tz at step S310. After resetting the timer count T to zero at step S311, a difference ΔN of the average engine speed change Δ Neav from a reference engine speed change Δ Neavo is calculated at step S312. An increase in the HC content of exhaust gas is estimated on the basis of the average engine speed change difference ΔN. An engine speed change expected to occur when the two-shot fuel injection is implemented under a same engine operating condition is substituted for the reference engine speed Δ Neavo. The greater the average engine speed change difference Δ N is, the greater the increase in the HC content of exhaust gas is estimated to become.

After the estimate of an increase in the HC content of exhaust gas, a judgement is subsequently made at step S313 as to the average engine speed change difference ΔN is greater than a reference average engine speed change difference Δ No which is an upper critical value for regarding the control of increasing the reduction substance content of exhaust gas as being normal. After changing a frequency of occurrences of abnormal control N by an increment of 1 (one) when the average engine speed change difference Δ N is greater than the reference average engine speed change difference Δ No at step S314 or without changing the frequency of occurrences of abnormal control N, a monitoring frequency M is changed by an increment of 1 (one) at step S315. Thereafter, a judgement is made at step S316 as to whether the monitoring frequency M has reached a predetermined reference monitoring frequency Mo. The sequence logic through steps S301 to S315 is repeated until the sequence logic is repeated a number of times represented by the reference monitoring frequency Mo. When the sequence logic is repeated the number of times represented by the reference monitoring frequency Mo, another judgement is made at step S317 as to whether an abnormality occurrence is greater than a reference ratio No. If the abnormality occurrence ratio N exceeds the reference ratio No, it is decided that the control of increasing the reduction substance content of exhaust gas is abnormal and a warning is made at step S318. When the abnormality occurrence ratio No is less than the reference ratio No or after having made the decision of abnormality, the frequency of occurrences of abnormal control N and the monitoring frequency M are reset to zero at step S319, and then the final step orders return for another sequence routine.

In the above embodiment, the influential period of time Tz restrains the control of increasing the reduction substance content of exhaust gas. In other words, the two-shot fuel injection is forced so as to prevent after burning due to an increase in the reduction substance content of exhaust gas from affecting on an engine speed change Δ Ne. In the case where after burning is utilized in order to increase the reduction substance content of exhaust gas, the after burning is timed to occur after an crank angle of ATDC 90°.

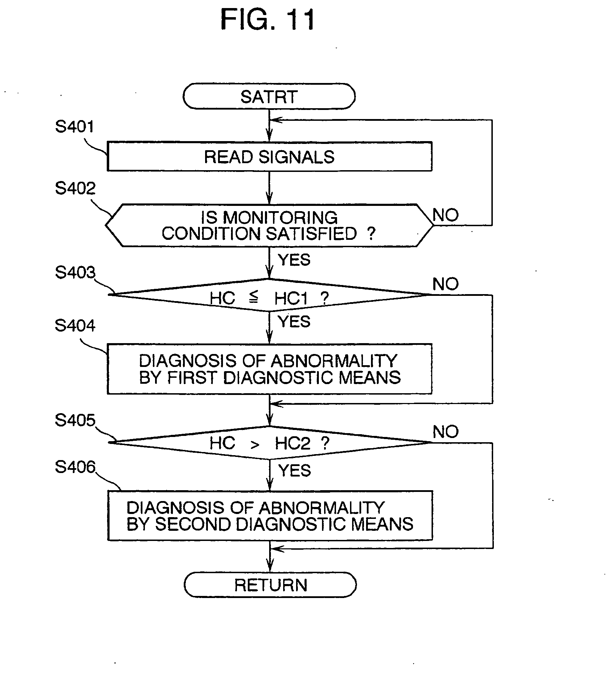

Figure 11 is a flow chart illustrating a sequence routine of control of selecting diagnostic means of the engine control system which is provided with first and second diagnostic means for performing diagnosis of failures of the estimating means for increasing the reduction substance content of exhaust gas. When the sequence logic commences and, after reading in signals representing control parameters at step S401, a judgement is made at step S402 as to whether a condition is satisfied for monitoring functional abnormality of the estimating means for increasing the reduction substance content of exhaust gas. The monitoring condition includes at least that a specified time has bee passed after the engine growing into an ordinary operating condition; that a diagnosis has not yet been made; that the engine has warmed up (i.e. the temperature of engine cooling water or the temperature of exhaust gas is higher than a specified level); and that a specified time has passed from first implementation of the three-shot fuel injection. When the monitoring condition is completely satisfied, a judgement is made at step S403 as to whether the estimated increase in the HC content of exhaust gas HC is equal to or less than a predetermine first reference value HC1. The estimated increase in the HC content of exhaust gas HC corresponds to a change in engine output torque in an expansion stroke which occurs following an increase in the reduction substance content in exhaust gas due to the three-shot fuel injection. The fact that an estimated increase in the HC content of exhaust gas HC is less than a predetermined reference value HC indicates that a change in engine output is less than a predetermined change.

When the estimated increase in the HC content of exhaust gas HC is less than the first reference value HC1, a diagnosis is implemented by the first diagnostic means at step S404. When the estimated increase in the HC content of exhaust gas HC exceeds the first reference value HC1 at step S403 or when after implementing the diagnosis at step S404, another judgement is made at step S405 as to whether the estimated increase in the HC content of exhaust gas is greater than a predetermine second reference value HC2, set larger than the first reference value CH1. When the estimated increase in the HC content of exhaust gas HC excesses the second reference value HC2, another diagnosis is implemented by the second diagnostic means at step S406.

Because the first reference value HC1 is smaller than the second reference value HC2, the diagnosis is implemented by the first diagnostic means only when an estimated increase in the HC content of exhaust gas HC is less than the first reference value HC1, by both the first and second diagnostic means when an estimated increase in the HC content of exhaust gas HC is between the first and second reference values HC1 and HC2, or by only the second diagnostic means when an estimated increase in the HC content of exhaust gas is greater than the first reference value HC1. When the diagnosis is implemented by both the first and second diagnostic means, either one of the two is effected prior to the other. Specifically, in the event where engine output torque significantly increasingly changes when the control of increasing the reduction substance content of exhaust gas is implemented, the diagnosis of abnormality or normality by the first diagnostic means is precise. However, in the event where an increase in engine output torque is small, this indicates that the engine output torque has no significant difference from that when the control of increasing the reduction substance content of exhaust gas is not implemented, then the diagnosis of abnormality or normality is not always precise or inaccurate. The event of a great increase in engine output torque occurs when there is a less amount of unburned residual fuel, in other words, when an estimated increase in the HC content of exhaust gas HC is small. Therefore, the first diagnostic means is utilized when an estimated increase in the HC content of exhaust gas HC is less than the first reference value HC1. On the other hand, the second diagnostic means is adapted to perform a diagnosis of abnormality on the basis of an amplitude of engine output torque in the event where the reduction substance is increased in amount due to implementation of the control of increasing the reduction substance content of exhaust gas, recirculated into the combustion chamber and then burned. Therefore, in the event where the engine output torque significantly increasingly changes, the diagnosis of abnormality or normality by the second diagnostic means is precise. The event of a great increase in engine output torque occurs when there is a large amount of unburned residual fuel, in other words, when an estimated increase in the HC content of exhaust gas HC is large. Therefore, the second diagnostic means is utilized when an estimated increase in the HC content of exhaust gas HC is less than the second reference value HC2. Although the diagnosis is implemented by both the first and second diagnostic means when an estimated increase in the HC content of exhaust gas HC is between the first and second reference values HC1 and HC2, a warning may be made when abnormality is found by at least one of the first diagnostic means. This is advantageous in respect of encouraging an early inspection of the engine control system. Further, making a warning only when abnormality is found by both the first diagnostic means provides improved reliability of the diagnosis.

The first reference value HC1 may be set larger than the second reference value HC2. In this case, when an estimated increase in the HC content of exhaust gas HC is between the first and second reference values HC1 and HC2, the diagnosis is not in any way implemented by the first diagnostic means nor by the second diagnostic means. This means that no diagnosis of abnormality is made when the diagnosis is expected to be unreliable.

In the case where the post fuel injection is utilized to increase the reduction substance content of exhaust gas, the first and second diagnostic means are selected to whether a post fuel injection timing Ip is on an advanced side or on a retarded side. When a post fuel injection timing Ip is on the advanced side, this indicates that the amount of unburned residual fuel in the combustion chamber is small, a change in engine output torque is increased due to implementation of the control of increasing the reduction substance content of exhaust gas. In this event, it is advantageous to utilize the first diagnostic means. When a post fuel injection timing Ip is on the retarded side, this indicates that the amount of unburned residual fuel in the combustion chamber is large, a change in engine output torque is increased due to combustion of the unburned residual fuel that is recirculated into the combustion chamber. In this event, it is advantageous to utilize the second diagnostic means.

In the light of the above, a sequence routine of control of selecting first and second diagnostic means is configured by changing steps S403 and S405 of the sequence routine illustrated by the flow chart on Figure 11. Specifically, the judgement at step S403 is made as to whether a post fuel injection timing Ip is on an advanced side, namely, earlier than a specified first crank angle Ip1. The judgement at step S405 is made as to whether a post fuel injection timing Ip is on a retarded side, namely, later than a specified second crank angle Ip2.

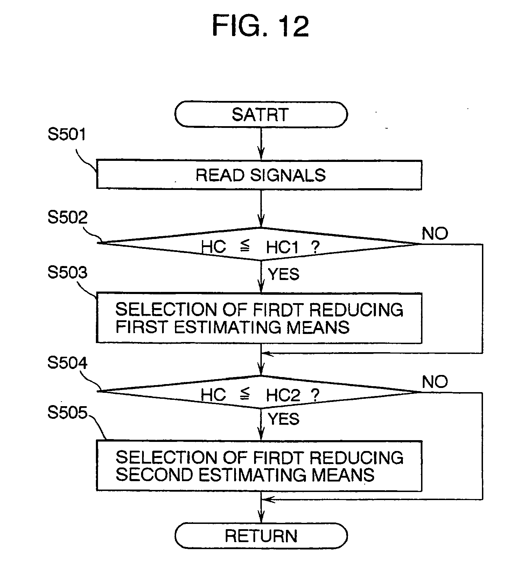

Figure 12 is a flow chart illustrating a sequence routine of control of selecting first and second estimating means for increasing the reduction substance content of exhaust gas. When the sequence logic commences and, after reading in signals representing control parameters at step S501, a judgement is made at step S502 as to whether as to whether an estimated increase in the HC content of exhaust gas HC is equal to or less than a predetermine first reference value HC1. When the estimated increase in the HC content of exhaust gas HC is equal to or less than the first reference value HC1, then, the first estimating means is utilized and performs an estimate of an increase in the HC content of exhaust gas at step S503. On the other hand, when the estimated increase in the HC content of exhaust gas HC exceeds the first reference value HC1 at step S502, or after performing an estimate of an increase in the HC content of exhaust gas at step S503, a judgement is made at step S504 as to whether as to whether the estimated increase in the HC content of exhaust gas HC is equal to or less than a predetermine second reference value HC2, set larger than the first reference value HC1. When the estimated increase in the HC content of exhaust gas HC exceeds the second reference value HC2, then, the second estimating means is utilized and performs an estimate of an increase in the HC content of exhaust gas at step S505.

Because the first reference value HCl is smaller than the second reference value HC2, the estimate of an increase in the HC content of exhaust gas is implemented by the first estimating means only when an estimated increase in the HC content of exhaust gas HC is less than the first reference value HC1, by both the first and second estimating means when an estimated increase in the HC content of exhaust gas HC is between the first and second reference values HC1 and HC2, or by the second estimating means only when an estimated increase in the HC content of exhaust gas HC is greater than the first reference value HC1. The first estimating means is utilized to estimate an increase in the reduction substance content of exhaust gas HC in the event where engine output torque significantly increases in an expansion stroke when the control of increasing the reduction substance content of exhaust gas is implemented. On the other hand, the second estimating means is utilized to estimate an increase in the HC content of exhaust gas in the event where the engine output torque significantly increases due to combustion of the reduction substance increased in amount and recirculated into the combustion chamber.
Therefore, in the event where the engine output torque significantly increasingly changes, the diagnosis of abnormality or normality by the second diagnostic means is precise. The event of a great increase in engine output torque occurs when there is a large amount of unburned residual. Accordingly, the estimated increase in the reduction substance content of exhaust gas is highly reliable.

Although, the engine control system according to the embodiment described above detects a change in engine output torque that is caused due to recirculation of exhaust gas containing an increased amount of reduction substance to the second estimating means and the second diagnostic means and performs the estimate of an increase in the reduction substance content of exhaust gas and the diagnosis of abnormality of the second estimating means on the basis of the detected engine output torque change, the estimate and diagnosis may be performed on the basis of a change in level of a signal representing the oxygen density of exhaust gas provided by an oxygen sensor disposed in the exhaust passage 10 or a change in level of a signal representing the temperature of exhaust gas provided by a temperature sensor disposed in the exhaust passage 10.

## Claims

1. An engine control system for an engine (1) which is equipped with combustion controlling means (6a, 9, 32) for controlling fuel combustion in a combustion chamber (4) according to engine operating conditions and reduction substance increasing means for increasing a reduction substance content of exhaust gas by changing a combustion control pattern by the combustion controlling means and which is equipped with torque detecting means (32, 35) for detecting output torque of the engine
**characterized by**:
estimating means (S1 ~ S6; SA1 ~ SA6; SB1 ~ SB6) for causing operation of the reduction substance increasing means during an expansion stroke and estimating an increase in the reduction substance content of exhaust gas on the basis of a change in the engine output torque caused at least in said expansion stroke due to operation of the reduction substance increasing means.

2. An engine control system as defined in claim 1, **characterized by**:
correcting means for correcting operation (SA7 ~ SA11; SA7 ~ SA10) of said reduction substance increasing means so as to correctively provide said increase in the reduction substance content of exhaust gas estimated by said estimating means (S1 ~ S6; SA1 ~ SA6; SB1 ~ SB6) meeting a target increase in the reduction substance content of exhaust gas.

3. An engine control system as defined in claim 1, **characterized by**:
diagnostic means (S7 ~ S14) for performing a diagnosis of abnormality of said reduction substance increasing means on the basis of a reference increase in the reduction substance content of exhaust gas set predetermined according to engine operating condition and said increase in the reduction substance content of exhaust gas estimated by said estimating means (S1 ~ S6; SA1 ~ SA6; SB1 ~ SB6).

## Patentansprüche

1. Motorsteuerungssystem für einen Motor (1), das mit Verbrennungssteuermitteln (6a, 9, 32) zum Steuern der Kraftstoffverbrennung in einem Brennraum (4) entsprechend den Motorbetriebsbedingungen und mit Reduktionsstofferhöhungsmitteln zum Erhöhen eines Reduktionsstoffgehalts des Abgases durch Ändern eines Verbrennungssteuerschemas durch die Verbrennungssteuermittel ausgestattet ist und das mit Drehmomenterfassungsmitteln (32, 35) zum Erfassen des Ausgangsdrehmoments des Motors ausgestattet ist,
**gekennzeichnet durch**:
Schätzmittel (S1-S6; SA1-SA6; SB1-SB6) zur Inbetriebnahme der Reduktionsstofferhöhungsmittel während eines Expansionshubs und zum Schätzen eines Anstiegs im Reduktionsstoffgehalt des Abgases aufgrund einer Änderung im Ausgangsdrehmoment des Motors, die zumindest während des Expansionshubs infolge des Betriebs der Reduktionsstofferhöhungsmittel verursacht wurde.

2. Motorsteuerungssystem nach Anspruch 1, **gekennzeichnet durch**:
Korrekturmittel zum Korrigieren der Funktionsweise (SA7-SA11; SA7-SA10) der Reduktionsstofferhöhungsmittel, um **durch** entsprechende Korrektur den durch die Schätzmittel (S1-S6; SA1-SA6; SB1-SB6) geschätzten Anstieg im Reduktionsstoffgehalt des Abgases bereitzustellen, womit ein Zielanstieg im Reduktionsstoffgehalt des Abgases erreicht wird.

3. Motorsteuerungssystem nach Anspruch 1, **gekennzeichnet durch**:
Diagnosemittel (S7-S14) zur Durchführung einer Diagnose der Abnormität der Reduktionsstofferhöhungsmittel aufgrund eines entsprechend den Motorbetriebsbedingungen voreingestellten Referenzanstiegs im Reduktionsstoffgehalt des Abgases und aufgrund des **durch** die Schätzmittel (S1-S6; SA1-SA6; SB1-SB6) geschätzten Anstiegs im Reduktionsstoffgehalt des Abgases.

## Revendications

1. Système de commande de moteur à combustion interne destiné à un moteur (1) équipé de moyens de régulation de la combustion (6a, 9, 32) afin de réguler la combustion de carburant dans une chambre de combustion (4) en fonction des conditions de fonctionnement du moteur et de moyens d'augmentation de substance réductrice afin d'augmenter une teneur en substance réductrice dans les gaz d'échappement en modifiant une cartographie de régulation de la combustion par les moyens de régulation de la combustion, et équipé de moyens de détection du couple (32, 35) afin de détecter le couple de sortie du moteur,
**caractérisé par**
des moyens d'estimation (S1 à S6 ; SA1 à SA6 ; SB1 à SB6) afin de déclencher le fonctionnement des moyens d'augmentation de substance réductrice durant le temps de détente et d'estimer une augmentation de la teneur en substance réductrice dans les gaz d'échappement sur la base d'une variation du couple de sortie du moteur causée au moins durant ledit temps de détente par le fonctionnement des moyens d'augmentation de substance réductrice.

2. Système de commande de moteur à combustion interne selon la revendication 1, **caractérisé par** :
des moyens de correction (SA7 à SA11 ; SA7 à SA10) afin de corriger le fonctionnement desdits moyens d'augmentation de substance réductrice de manière à fournir à titre correctif ladite augmentation de la teneur en substance réductrice dans les gaz d'échappement estimée par lesdits moyens d'estimation (S1 à S6 ; SA1 à SA6 ; SB1 à SB6) en accord avec une consigne d'augmentation de la teneur en substance réductrice dans les gaz d'échappement.

3. Système de commande de moteur à combustion interne selon la revendication 1, **caractérisé par** :
des moyens de diagnostic (S7 à S14) afin d'effectuer un diagnostic d'anomalie desdits moyens d'augmentation de substance réductrice sur la base d'une augmentation de référence de la teneur en substance réductrice dans les gaz d'échappement prédéterminée en fonction des conditions de fonctionnement du moteur et de ladite augmentation de la teneur en substance réductrice dans les gaz d'échappement estimée par lesdits moyens d'estimation (S1 à S6 ; SA1 à SA6 ; SB1 à SB6).
